# FASCICULE DE BREVET EUROPEEN

(11) **EP 0 484 194 B1**
(45) Date de publication et mention de la délivrance du brevet: **05.07.1995**
(21) Numéro de dépôt: 91402771.9
(22) Date de dépôt: 17.10.1991
(51) Int. Cl.: G01D 5/34

(54) **Capteur d'angle de rotation**
Drehwinkelsensor
Detector of angle of rotation

(30) Priorité: 19.10.1990 FR 9012944
(43) Date de publication de la demande: 06.05.1992
(73) Titulaire: VALEO ELECTRONIQUE, 94000 Creteil (FR)
(72) Inventeur: Tranchon, Georges, F-94000 Créteil (FR)
(74) Mandataire: Gamonal, Didier

(56) Documents cités:
- EP-A- 0 126 843
- FR-A- 1 400 300
- GB-A- 2 001 767
- US-A- 4 031 386
- PATENT ABSTRACTS OF JAPAN, vol. 8, no. 254 (P-315)[1691], 21 novembre 1984; & JP-A-59 126 209 (MATSUSHITA ELECTRIC IND. CO., LTD) 20-07-1984

## Description

La présente invention concerne un capteur d'angle de rotation destiné à fournir aussi un signal de détection du sens de rotation et/ou du nombre de tours effectués. Elle concerne aussi un dispositif de direction assistée de véhicule comportant un tel capteur.

La présente invention trouve application notamment dans le domaine de la direction assistée de véhicule, comme des véhicules automobiles, domaine dans lequel la commande d'un système électronique permet d'assister l'effort sur un organe de braquage comme la colonne de direction du véhicule. Cette commande est une fonction de l'angle de braquage demandé par l'action du conducteur sur le volant du véhicule et peut différer entre le train avant et le train arrière dans le cas des véhicules à quatre roues directrices où le train des roues arrière directrices présente un angle de braquage différent de l'angle de braquage des roues avant.

Dans l'art antérieur, on a déjà proposé un certain nombre de dispositifs destinés à indiquer le sens de rotation, c'est-à-dire le signe de l'angle de rotation mesuré, ainsi qu'éventuellement à compter le nombre de tours effectués.

En effet dans l'art antérieur, on connaît notamment des dispositifs comportant au moins un disque dont la rotation suit la variation de l'angle que l'on cherche à mesurer. La périphérie du disque coopère avec un moyen de mesure de l'angle de rotation. Un tel capteur est représenté notamment dans l'art antérieur sous le nom de codeur angulaire incrémental. Dans un tel dispositif, le disque comporte des encoches ou des traits dont le passage devant un moyen de lecture d'un type donné engendre une impulsion sur un signal de mesure qui peut être exploité électroniquement de façon à fournir l'angle absolu, la vitesse de variation de l'angle, le sens de rotation, et éventuellement le nombre de tours effectués.

Jusqu'à présent dans l'art antérieur, de tels dispositifs exigent des moyens coûteux pour compter le nombre de tours (mémorisation du comptage des impulsions, pistes supplémentaires, etc.).

Par exemple dans le document Patent Abstract of Japan, vol. 8, N° 254 (P-315) (1691) et JP-A-59 126 209 il est prévu grand nombre de pièces, le capteur d'angle faisant appel à une génératrice tachymétrique.

Dans le document US-A-4 031 386 conforme au préambule de la revendication 1, il est prévu trois premières roues et deux roues secondaires portées chacune par un support.

Ce support porte un grand nombre de capteurs optroniques, tandis que les premières roues présentent une pluralité de réflecteurs.

Cette disposition est coûteuse et n'est pas aussi fiable que désiré.

C'est un objet de la présente invention de proposer un moyen permettant, sur un codeur d'angle ou capteur d'angle de rotation, de fournir aussi de manière économique et fiable, un signal représentatif de l'accomplissement d'au moins un tour complet du codeur.

Ce problème est résolu selon l'invention par la partie caractérisante de la revendication 1.

Grâce à l'invention, la translation du chariot est une indication du sens et du nombre de tours effectués par la première roue en sorte qu'il est possible de fournir de manière économique et fiable un signal représentatif de l'accomplissement d'au moins un tour complet du codeur.

L'invention concerne aussi un dispositif de direction assistée de véhicule comportant un capteur selon l'invention dont la première roue est liée mécaniquement à un organe de direction comme la colonne de direction.

D'autres avantages et caractéristiques de la présente invention seront mieux compris à l'aide de la description et des figures qui sont :

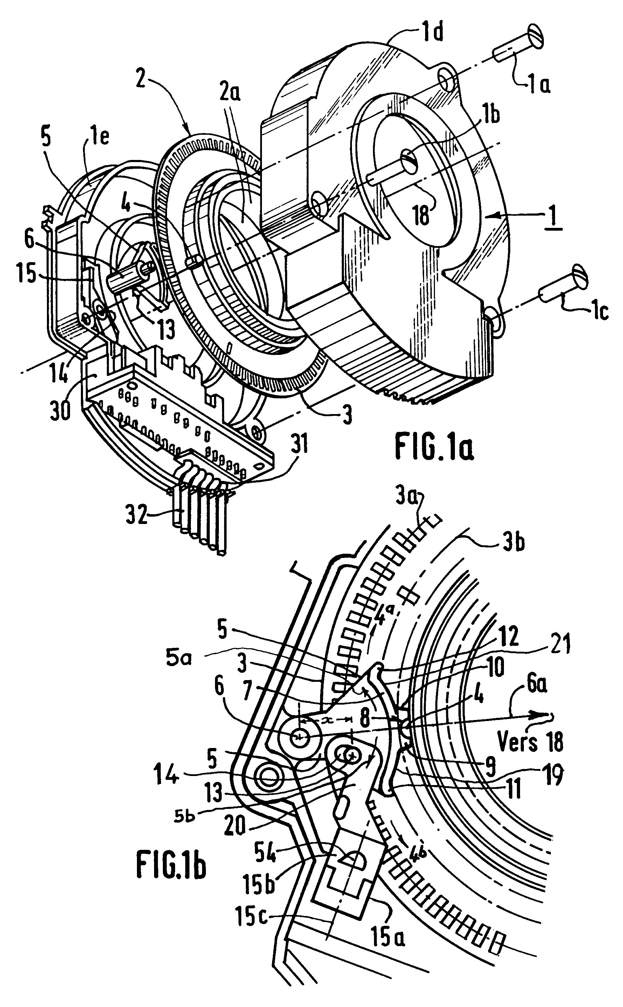

- la figure 1a : un schéma d'un mode de réalisation d'un codeur incrémental ou capteur d'angle de rotation selon l'invention, en éclaté de montage.
   Dans un tel mode de réalisation le capteur d'angle de rotation 1 comporte principalement un disque ou roue 2 lié à un arbre de rotation dont on a représenté l'axe 18, dont le mouvement angulaire doit être mesuré. L'arbre de rotation d'axe 18 est lié au disque ou roue 2 par deux joints toriques 2a. Le capteur 1 comporte un boîtier constitué d'un capot 1d fixé sur une embase 1e par trois vis 1a,1b,1c. Le disque ou roue 2 comporte un certain nombre d'encoches 3 sur sa périphérie ainsi qu'il est connu dans la technologie des codeurs angulaires optiques. Les encoches 3 appartiennent à au moins une piste lue par un détecteur lié à un point fixe de référence du capteur. Ce détecteur convertit l'information détectée sur la piste 3 en signaux électriques qui peuvent être traités par une électronique convenable pour fournir au moins :
- une mesure de la position angulaire de la roue liée à l'arbre de rotation par rapport à une position de référence, et/ou,
- une mesure de la vitesse de rotation de la roue liée à l'arbre de rotation au moins entre deux mesures de la position angulaire précitée, et/ou,
- déterminer le sens de rotation de la roue liée à l'arbre de rotation.

L'association d'un capteur optique à une électronique fait un capteur optronique. Or, une telle électronique est coûteuse et l'invention vise à ramener dans le capteur lui-même certaines des mesures ou déterminations précédentes. En particulier dans certaines applications, comme la surveillance de l'état de braquage de roues directrices d'un véhicule, des informations simples sont nécessaires comme le nombre de tours effectués par la colonne de direction ou le sens de sa rotation pour savoir si l'on est prêt ou non de la butée de braquage des roues, ou encore si le braquage est en position neutre. Ces informations pourraient être élaborées de manière électronique. Mais leur réalisation est coûteuse. L'invention vise à produire un moyen fiable et moins coûteux pour élaborer les informations précitées, notamment pour l'application à la production de masse de capteurs angulaires pour la direction assistée automobile.

Cependant la présente invention ne se limite pas à la technologie des codeurs optiques, mais au contraire s'étend à d'autres technologies de mesures, notamment utilisant des pistes magnétiques ou autres.

Cette première roue 2 comporte aussi un pion 4 fixé à une certaine distance du centre de rotation du disque ou roue 2 et est donc solidaire d'un point tournant du premier disque ou roue 2. Ce pion 4 traverse l'épaisseur du disque 2 et son prolongement, non visible à la figure 1a, est destiné à venir s'engager dans un premier logement 8 d'une seconde roue 5 montée sur un arbre 6 lié à l'embase 1e du boitier du capteur 1, ainsi qu'il est représenté à la figure 1b.

La seconde roue 5 peut être, dans un mode préféré de réalisation, un secteur angulairement limité de roue circulaire dentée. La seconde roue 5 comporte à sa périphérie une zone 7 dentée, dont la forme des dents épouse la périphérie du pion 4, destinée à fournir une liaison mécanique entre le mouvement de la roue 2 et le mouvement en réponse de la seconde roue 5 par l'intermédiaire du pion et des dents. En particulier, on remarque que le déplacement de la seconde roue 5 est repéré à la figure 1b par la flèche 5a qui est le mouvement de réponse si le pion 4 se déplace selon la flèche 4a et par la flèche 5b qui est le mouvement de réponse si le pion 4 se déplace selon la flèche 4b.

Un chariot 15b, représenté aux figures, et pouvant se mouvoir en translation, est lié à la roue dentée 5 par l'intermédiaire d'un système 20 du type "bielle-manivelle" réalisé de la manière suivante : un axe 13, disposé sur la seconde roue 5 à une distance x de son axe de rotation 6, s'engage dans une lumière ou ouverture 14 de forme ablangue du chariot 15b. Ce système bielle-manivelle, formé de l'axe 13 et de la roue dentée 5 met le chariot 15b en mouvement de translation. La translation du chariot 15b est une indication du sens et du nombre de tours effectués par la première roue 2.

D'autre part, le logement 8 pratiqué dans la zone périphérique 7 de la seconde roue 5 est réalisé par construction de manière à fournir l'indication d'une position neutre ou position de référence du capteur. Dans une telle position neutre, représentée par la direction 6a notamment à la figure 1b, le pion 4 est inclus dans le logement 8 dont la forme intérieure épouse la périphérie du pion 4. Le logement 8 est constitué entre deux dents 9 et 10 qui viennent emprisonner le pion 4 lors du passage à la position neutre. La position du chariot 15b dans un tiroir 15a est alors détectée pour fournir un signal d'état neutre en sorte que le premier logement 8 est un logement de position neutre. En outre la seconde roue 5 comporte un second logement (figure 1b) au moins d'un côté (19 ou 21) du premier logement 8 pour indiquer l'accomplissement d'au moins un premier tour de la première roue 2. Le second logement est pratiqué autre l'une (9 ou 10) des dents limitant le premier logement 8 et une autre dent (11 ou 12) de la zone dentée 7 de la seconde roue 5.

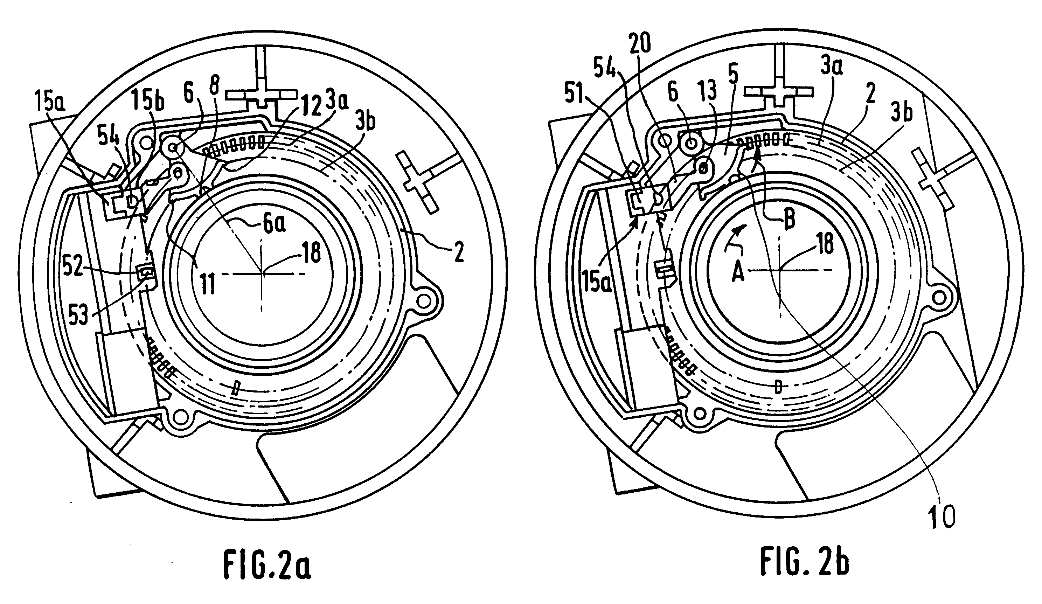

Les figures 2a à 2g sont des vues planes représentant différentes positions angulaires caractéristiques, du capteur selon l'invention. A ces figures, les éléments décrits aux figures 1a et 1b n'ont pas toujours été référencés pour éviter d'alourdir le dessin.

La figure 2a correspond à la position neutre où la ligne 6a reliant l'axe 18 à l'asce de rotation 6 de la roue 5 passe par le centre du logement 8 et le pion 4 occupant complètement ce dernier.

A la figure 2b, le pion 4 sort de la position neutre.

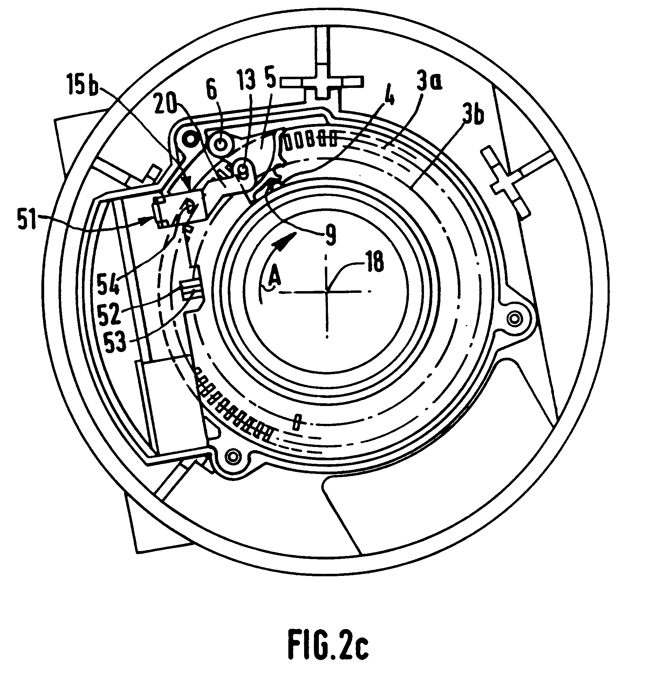

La première roue 2 tourne selon la flèche A et la seconde roue 5 tourne vers la flèche B. Le levier qui relie l'axe 13 au chariot 15b tire celui-ci en translation selon l'asce 15c (figure 1b) dans le tiroir 15a. Quand la première roue 2 a exécuté presque un tour complet autour de l'axe 18 dans le sens des aiguilles d'une montre, le pion 4 parvient dans la position représentée à la figure 2c. Si la rotation se poursuit, l'extrémité de la dent 9 est au contact (à la figure 2c) de la périphérie du pion 4 et le chariot 15b subit un nouveau déplacement. De ce fait, le mouvement supplémentaire du chariot, toujours dans le même sens de translation, permet d'indiquer la réalisation d'un tour complet de rotation du disque ou première roue 2. On peut multiplier les logements ou dents 8,9,10 de façon à fournir une impulsion en détectant chaque déplacement du chariot 15b dans le tiroir 15a et de façon à compter le nombre de tours effectués. En particulier, cette information est particulièrement nécessaire dans le cas des directions assistées de véhicules, de façon à savoir à quelle distance des butées des roues directrices se trouve t'on lors de l'exécution d'une manoeuvre en direction assistée, et dans le cas des roues arrière directrices.

D'autre part, le chariot 15b coopère avec un moyen de traduction du sens de rotation et/ou de l'accomplissement d'au moins un tour complet de rotation de la première roue de façon à élaborer un signal de mesure comme un signal électrique, optique ou autres.

Au dessin, on a représenté un moyen de traduction de l'accomplissement d'au moins un tour complet de la rotation de la roue 2 comprenant le chariot 15b et un couple de diodes émettrice et réceptrice 51 destiné à élaborer un signal d'état de la position du chariot 15b ; signal qui est l'image de l'accomplissement d'un tour complet de rotation de la roue 2. Dans ce mode de réalisation, la détection du sens de rotation est dévolue à un détecteur de marques enregistrées sur des pistes 3a,3b. La première roue, ainsi qu'on le voit à la figure 1b et aux figures 2a à 2g, comporte une seconde piste 3b d'encoches, à une seule encoche 53, l'encoche 53 indiquant la position du zéro mécanique ou position neutre du système.

En position neutre (figure 2a), le pion 4 de la roue 2 est dans le logement 8 de la seconde roue 5, un détecteur optique 52 est en regard de l'encoche 53 sur la piste 3a de la roue 2. Un signal électrique de référence est émis. Dans cette configuration, le chariot 15b est dans une position telle qu'il obture une ouverture 54 pratiquée dans le tiroir 15a. Le détecteur optique 51 lié au chariot 15b ne reçoit aucune lumière d'une diode non représentée qui éclaire l'ouverture 54. Il n'y a donc pas de signal.

On remarque que la détection du sens de rotation et du nombre de tours se fait grâce à deux détecteurs 51, 52 en quadrature, non représentés de manière dètaillèe sur les schémas.

Au démarrage en rotation de la roue 2, le pion 4 sort de la position neutre (figure 2b) entraînant légèrement en translation le chariot 15b, la roue 2 poursuit sa rotation dans le sens A des aiguilles d'une montre. Le pion 4 repousse la dent 10 de la seconde roue 5.

L'encoche 53 s'écarte du détecteur optique 52 qui émet un signal logique au niveau bas. Par comparaison avec le signal engendré par un autre détecteur non représenté qui lit les encoches qui sont les marques enregistrées sur l'autre piste 3a, le signal du détecteur des marques est l'indication de l'angle et du sens de rotation de la roue 2. Par contre, la seconde roue 5 a tourné dans le sens B contraire des aiguilles d'une montre et le chariot 15b se déplace dans le tiroir 15a en obturant toujours l'ouverture 54. Les signaux d'état émis par les détecteurs 52 et 51 sont alors "00".

Le pion 4 parvient dans la position représentée à la figure 2c. Dans cette configuration, le pion 4 vient en contact de la dent 9 de la roue 5 ; si la rotation se poursuit dans le sens A, le pion 4 pousse l'extrémité de la dent 9 et le chariot 15b subit un nouveau déplacement. De ce fait, le mouvement supplémentaire du chariot 15b, toujours dans le même sens de translation permet de libérer le passage 54 du flux lumineux entre la diode émettrice et réceptrice du détecteur optique 51 ; un nouveau signal électrique est émis permettant d'indiquer l'accomplissement d'un tour complet de rotation du disque 2, les signaux d'état logique des détecteurs étant "01".

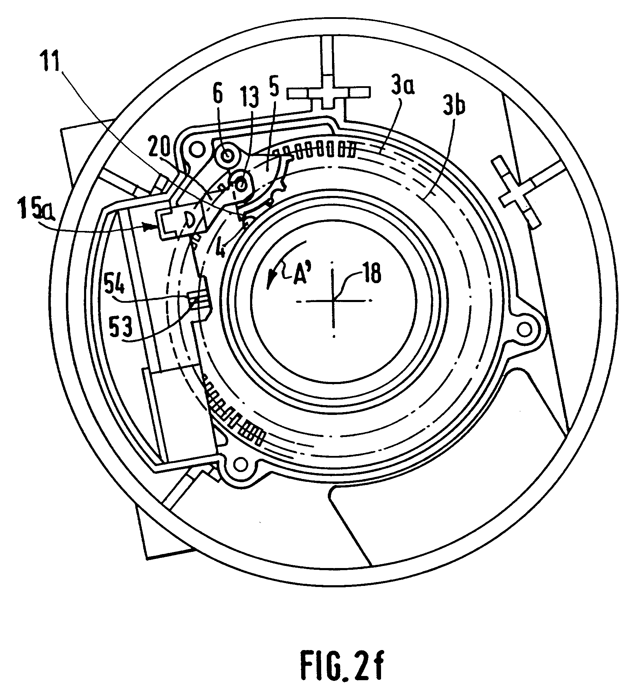

Au renversement du sens de rotation selon A′ (figure 2f), le pion 4 vient au contact de la dent 11 et la pousse ; le chariot 15b se déplace, obturant l'ouverture 54 et le système revient dans la configuration de la figure 2b.

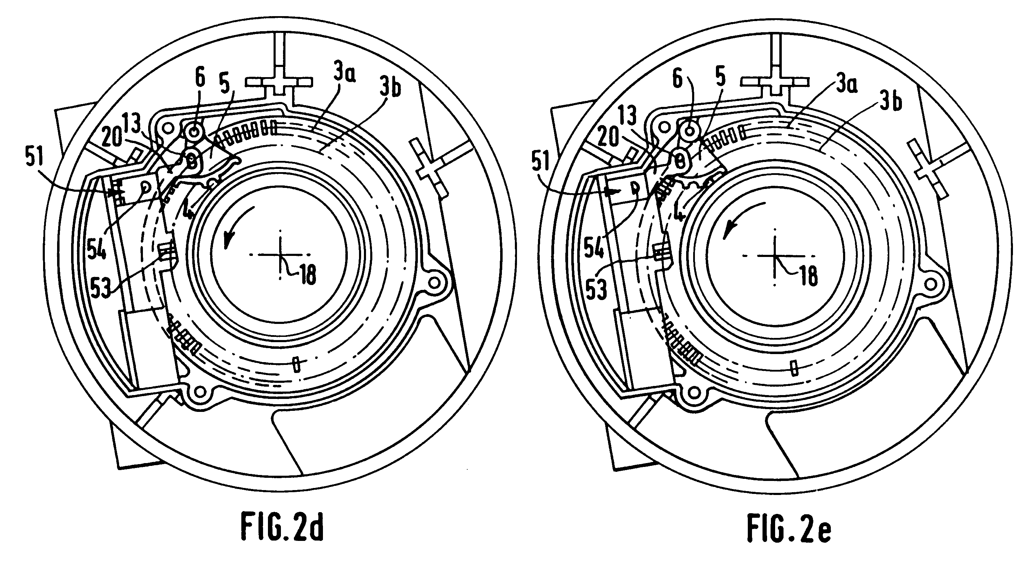

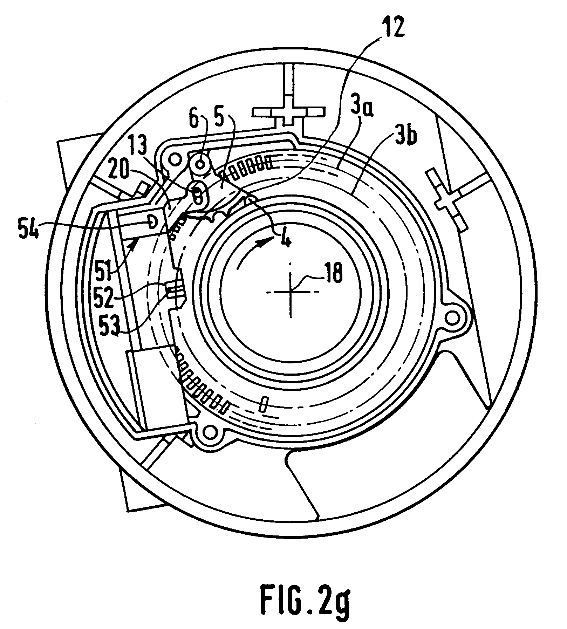

Pour la rotation inverse des aiguilles d'une montre, le système est symétrique (figures 2a,d,e,g) ; le passage du flux lumineux est libéré grâce à l'encoche 54 ménagée dans le tiroir 15a.

La présente invention ne se limite pas à la détection d'un seul tour de rotation complet mais au contraire peut comporter plusieurs paires de détecteurs optiques.

Le moyen de traduction représenté à la figure 2 a été décrit sous la forme optique. Dans d'autres modes de réalisation, il est possible de réaliser un adressage d'une mémoire enregistrée électronique par des commutateurs et dont les adresses contiennent des mots binaires, par exemple à huit bits, représentatifs d'un code indiquant le sens de rotation et/ou le nombre de tours effectués et sous la forme de pistes conductrices, l'action du chariot reliant électriquement les pistes.

On remarque aussi que, selon l'invention, la piste 3a sur le premier disque 2 peut être lue par un détecteur optique classique non représenté. Ce détecteur sert à élaborer le signal représentatif de l'angle instantané de rotation à au moins un tour près (modulo 360°). Le signal de sortie peut être exploité par une électronique convenable, en particulier fournissant un angle précis et une information de vitesse en différenciant le signal du capteur. Un tel circuit est de réalisation connue. Dans un mode de réalisation, ce circuit a été intégré dans le circuit de traitement des signaux issus des détecteurs optiques 51 et 52 et monté sur une platine 30 visible à la figure 1a, un connecteur 31 permettant de fournir la polarisation sur ce circuit (non visible à la figure 1a) par exemple sur deux des six fils 32 parvenant au connecteur 31, les quatre fils restant étant disponible pour les signaux issus des trois détecteurs optiques composants du capteur selon l'invention.

Le présent capteur d'angle est avantageusement disposé sur une direction assistée de véhicule. En particulier, ainsi qu'il est connu, une telle direction comporte un organe de direction, un détecteur des efforts du conducteur et un moyen de couplage de l'organe de direction d'une part aux roues directrices avant et/ou arrière, et d'autre part à une source d'énergie mécanique commandée en fonction de lois de braquage des roues directrices et des signaux de sortie du détecteur des efforts du conducteur. L'organe de direction comporte un volant manoeuvré par le conducteur et monté à une première extrémité d'une colonne de direction. La détection des efforts du conducteur peut être obtenue par une multitude de moyens de mesure. Mais l'inventeur a découvert que cette mesure est dans un très grand nombre de cas suffisamment exécutée par la simple mesure de l'angle instantané de rotation de la colonne de direction sous réserve de connaître à chaque instant la position neutre, le sens de rotation et le nombre de tours effectués.

Ainsi, le capteur d'angle de rotation de l'invention est particulièrement adapté à résoudre le problème précité quand la première roue 5 est liée à la rotation de la colonne de direction, pour servir de détecteur des efforts du conducteur pour commander un moteur d'asservissement.

## Revendications

1. Capteur d'angle de rotation, notamment du type optronique, du genre comportant une première roue (2) avec au moins une piste (3) porteuse d'informations de position dont la lecture par un détecteur sert à mesurer l'angle et le sens de rotation de la première roue (2) et à indiquer un point de référence, une seconde roue (5) au moins partiellement liée mécaniquement avec le mouvement de la première roue (2) par l'intermédiaire de moyens de liaison et dont le déplacement est une indication du sens et du nombre de tours effectués par la première roue (2), caractérisé en ce que lesdits moyens de liaison entre les deux roues (2,5) comportent un pion (4) solidaire d'un point tournant sur la première roue (2) et qui vient s'engrener dans une première position angulaire dans un premier logement (8) de la seconde roue (5), position angulaire dite position neutre ou position de référence, en ce que la seconde roue (5) est solidaire d'un chariot (15b) se déplaçant linéairement sur un moyen de traduction (15a,51) du sens de rotation et/ou de l'accomplissement d'au moins un tour complet de rotation de la première roue (2) en un signal de mesure comme un signal électrique, optique ou autres, ledit moyen de traduction comportant au moins un détecteur (51) détectant le déplacement de ladite seconde roue (5) qui sert d'indication du nombre de tours effectués par ladite première roue (2) et/ou du sens de rotation de celle-ci et en ce que le chariot (15b) est lié à la seconde roue (5) par une liaison articulée (6,20,14) "biellemanivelle".

2. Capteur selon la revendication 1, caractérisé en ce que ledit moyen de traduction est du type optique et comporte un détecteur optique (51) associé audit chariot (15b).

3. Capteur selon la revendication 2, caractérisé en ce que ledit chariot est monté dans un tiroir (15a) et est propre à obturer une ouverture (54) pratiquée dans ledit tiroir (15a), ladite ouverture étant éclairée par une diode.

4. Capteur selon l'une quelconque des revendications 1 à 3, caractérisé en ce que le premier logement (8) est constitué par une cavité reproduisant la forme extérieure du pion (4) et ménagée entre deux dents (9,10) dans une zone dentée (7) périphérique de la seconde roue (5).

5. Capteur selon la revendication 4, caractérisé en ce que la seconde roue (5) comporte au moins un second logement d'au moins un côté (19 ou 21) du premier logement (18) pour indiquer l'accomplissement d'au moins un premier tour de la première roue (2), le second logement étant pratiqué entre l'une (9 ou 10) des dents limitant le logement (8) de position neutre et une autre dent (11 ou 12) de la zone (7) dentée de la seconde roue (5).

6. Capteur selon l'une des revendications précédentes, caractérisé en ce que la première roue (2) comporte au moins une piste (3a,3b) sur laquelle sont enregistrées des informations de position lues par un détecteur convenable qui fournit un signal de valeur absolue de l'angle de rotation, le capteur comporte un boîtier (1,1e) à l'intérieur duquel est inclus un circuit électronique de mise en forme des signaux du capteur et dont les sorties sont connectées à un connecteur (31) accessible (32) de l'extérieur.

7. Capteur selon la revendication 6, caractérisé en ce que la première roue comporte au moins une piste (3a,3b) sur laquelle sont enregistrées des informations de position lues par un détecteur convenable qui fournit un signal de valeur absolue de l'angle de rotation, et en ce que le signal de sortie peut être traité et/ou transmis au connecteur (31).

8. Capteur selon la revendication 7, caractérisé en ce que l'une des pistes (3b) comporte une information indicative de la position neutre du système constituée par une marque (53), et en ce que l'avance ou le retard de phase du signal de lecture fourni par un premier détecteur disposé en quadrature sur le signal de lecture fourni par un second détecteur des marques enregistrées de l'autre piste (3a) indique le sens de rotation.

9. Dispositif de direction assistée, caractérisé en ce qu'il comporte un capteur selon l'une des revendications précédentes, et dont la première roue est liée mécaniquement à un organe de direction comme la colonne de direction.

## Claims

1. An angle of rotation sensor, in particular of the optronic type, of the kind comprising a first wheel (2) with at least one track (3) for carrying position information, reading of which by a detector serves for measuring the angle and direction of rotation of the first wheel (2) and to indicate a point of reference, a second wheel (5) at least partially coupled mechanically with the motion of the first wheel (2) through coupling means, with its displacement being an indication of the direction and number of revolutions effected by the first wheel (2), characterised in that the said coupling means between the two wheels (2, 5) comprise a pin (4) which is fixed at a rotating point on the first wheel (2), and which meshes in a first recess (8) of the second wheel (5) when in a first angular position which is a neutral or reference position, in that the second wheel (5) is fixed to a carriage (15b) which is displaceable in a straight line on a conversion means (15a, 51) for converting the direction of rotation and/or the completion of at least one full revolution in the rotation of the first wheel (2) into a measurement signal such as an electrical, optical or other signal, the said conversion means comprising at least one detector (51) for detecting the displacement of the said second wheel (5) that serves as an indication of the number of revolutions effected by the said first wheel (2) and/or of the direction of rotation of the latter, and in that the carriage (15b) is coupled to the second wheel (5) through an articulated "crank and connecting rod" linkage (6, 20, 14).

2. A sensor according to Claim 1, characterised in that the said conversion means is of the optical type, and comprises an optical detector (51) associated with the said carriage (15b).

3. A sensor according to Claim 2, characterised in that the said carriage is mounted in a retaining member (15a) and is arranged to cover an aperture (54) formed in the said retaining member (15a), the said aperture being illuminated by a diode.

4. A sensor according to any one of Claims 1 to 3, characterised in that the first recess (8) comprises a cavity reproducing the external shape of the pin (4) and defined between two teeth (9, 10) in a peripheral toothed zone (7) of the second wheel (5).

5. A sensor according to Claim 4, characterised in that the second wheel (5) comprises at least one second recess on at least one side (19 or 21) of the first recess (18), for indicating the completion of at least one first revolution of the first wheel (2), the second recess being formed between one (9 or 10) of the teeth defining the neutral position recess (8) and another tooth (11 or 12) of the toothed zone (7) of the second wheel (5).

6. A sensor according to one of the preceding Claims, characterised in that the first wheel (2) comprises at least one track (3a, 3b) on which is marked position information, which is read by a suitable detector that supplies a signal of the absolute value of the angle of rotation, and the sensor includes a housing (1, 1e) within which there is contained an electronic circuit for processing signals from the sensor, the outputs of which are connected to a connector (31) which is accessible (32) from the outside.

7. A sensor according to Claim 6, characterised in that the first wheel comprises at least one track (3a, 3b) on which there is marked position information, which is read by a suitable detector that supplies a signal of the absolute value of the angle of rotation, and in that the output signal is arranged to be processed and/or transmitted to the connector (31).

8. A sensor according to Claim 7, characterised in that one of the tracks (3b) includes data indicating the neutral position of the system and comprising a mark (53), and in that advance or retard of the phase of the reading signal supplied by a first detector, disposed in quadrature on the reading signal supplied by a second detector for the marks on the other track (3a), indicates the direction of rotation.

9. A power steering system, characterised in that it includes a sensor in accordance with one of the preceding Claims, and in which the first wheel is coupled mechanically to a steering member such as the steering column.

## Patentansprüche

1. Drehwinkelsensor, insbesondere optoelektronischen Typs, in der Ausführung mit einem ersten Rad (2) mit mindestens einer Spur (3) als Träger von Positionsinformationen, deren Ablesung durch einen Abtaster zur Messung des Drehwinkels und der Drehrichtung des ersten Rads (2) und zur Angabe eines Bezugspunkts dient, sowie mit einem zweiten Rad (5), das zumindest teilweise mechanisch mit der Bewegung des ersten Rads (2) über Verbindungsmittel verbunden ist und dessen Verschiebung eine Angabe der Drehrichtung und der Anzahl der durch das erste Rad (2) ausgeführten Umdrehungen darstellt , **dadurch gekennzeichnet,** daß die genannten Verbindungsmittel zwischen den beiden Rädern (2, 5) einen Stift (4) umfassen, der fest mit einem auf dem ersten Rad (2) umlaufenden Punkt verbunden ist und der in einer ersten Winkelposition in einer ersten Aufnahme (8) des zweiten Rads (5) eingreift, wobei diese Winkelposition als Neutralstellung oder Bezugsposition bezeichnet wird, daß das zweite Rad (5) fest mit einem Schlitten (15b) verbunden ist, der sich linear auf einem Mittel zur Umsetzung (15a, 51) der Drehrichtung und/oder der Ausführung wenigstens einer vollständigen Umdrehung des ersten Rads (2) in ein Meßsignal, etwa in ein elektrisches, optisches oder sonstiges Signal, verschiebt wobei dieses Umsetzungsmittel wenigstens einen Abtaster (51) enthält, der die Verschiebung des genannten zweiten Rads (5) erfaßt, die zur Angabe der Anzahl der durch das erste Rad (2) ausgeführten Umdrehungen und/oder seiner Drehrichtung dient, und daß der Schlitten (15b) mit dem zweiten Rad (5) über eine "Kurbeltrieb"-Gelenkverbindung (6, 20, 14) verbunden ist.

2. Sensor nach Anspruch 1, **dadurch gekennzeichnet,** daß es sich bei dem genannten Umsetzungsmittel um einen optischen Typ handelt und daß es einen optischen Abtaster (51) umfaßt, der mit dem genannten Schlitten (15b) verbunden ist.

3. Sensor nach Anspruch 2, **dadurch gekennzeichnet,** daß der genannte Schlitten in einem Einschub (15a) angebracht ist und eine Öffnung (54) verschließen kann, die in dem genannten Einschub (15a) vorgesehen ist, wobei diese Öffnung durch eine Diode beleuchtet wird.

4. Sensor nach einem der Ansprüche 1 bis 3 , **dadurch gekennzeichnet,** daß die erste Aufnahme (8) aus einer Vertiefung besteht, welche die äußere Form des Stifts (4) nachbildet und zwischen zwei Zähnen (9, 10) in einem gezahnten Umfangsbereich (7) des zweiten Rads (5) vorgesehen ist.

5. Sensor nach Anspruch 4, **dadurch gekennzeichnet,** daß das zweite Rad (5) wenigstens eine zweite Aufnahme auf mindestens einer Seite (19 oder 21) der ersten Aufnahme (8) umfaßt, um die Ausführung wenigstens einer ersten Umdrehung des ersten Rads (2) anzugeben, wobei die zweite Aufnahme zwischen einem (9 oder 10) der Zähne, welche die Neutralstellungsaufnahme (8) begrenzen, und einem anderen Zahn (11 oder 12) des gezahnten Bereichs (7) des zweiten Rads (5) vorgesehen ist.

6. Sensor nach einem der vorangehenden Ansprüche, **dadurch gekennzeichnet,** daß das erste Rad (2) wenigstens eine Spur (3a, 3b) umfaßt, auf der Positionsinformationen aufgezeichnet sind, die durch einen geeigneten Abtaster abgelesen werden, der ein Absolutwertsignal für den Drehwinkel liefert, wobei der Sensor ein Gehäuse (1, 1e) umfaßt, in dessen Innern eine elektronische Schaltung für die Aufbereitung der Signale des Sensors enthalten ist und dessen Ausgänge an einen von außen zugänglichen (32) Verbinder (31) angeschlossen sind.

7. Sensor nach Anspruch 6, **dadurch gekennzeichnet,** daß das erste Rad wenigstens eine Spur (3a, 3b) umfaßt, auf der Positionsinformationen aufgezeichnet sind, die durch einen geeigneten Abtaster abgelesen werden, der ein Absolutwertsignal für den Drehwinkel liefert, und daß das Ausgangssignal verarbeitet und/oder an den Verbinder (31) übertragen werden kann.

8. Sensor nach Anspruch 7, **dadurch gekennzeichnet,** daß eine der Spuren (3b) eine Information zur Angabe der Neutralstellung des Systems enthält, die aus einer Markierung (53) besteht, und daß die Phasenvoreilung oder die Phasenverzögerung des Lesesignals, das durch einen ersten Abtaster geliefert wird, der um 90° phasenverschoben zu dem Lesesignal angeordnet ist, das von einem zweiten Abtaster der auf der anderen Spur (3a) aufgezeichneten Markierungen geliefert wird, die Drehrichtung angibt.

9. Servolenkung, **dadurch gekennzeichnet,** daß sie einen Sensor nach einem der vorangehenden Ansprüche umfaßt, dessen erstes Rad mechanisch mit einem Lenkorgan, wie etwa der Lenksäule, verbunden ist.
